# EUROPÄISCHE PATENTANMELDUNG

(11) **EP 4 137 855 A1**
(43) Veröffentlichungstag der Anmeldung: **22.02.2023**
(21) Anmeldenummer: 21191471.8
(22) Anmeldetag: 16.08.2021
(51) Int. Cl.: G02B 6/44

(54) **ANSCHLUSSDOSE FÜR DIE FASEROPTISCHE VERKABELUNG VON FASEROPTISCHEN ANSCHLÜSSEN**

(71) Anmelder: Diamond SA, 6616 Losone (CH)
(72) Erfinder: Coggi, Victor, 6616 Losone (CH); Minazzi, Maurizio, 21010 Germignaga (IT)
(74) Vertreter: Hepp Wenger Ryffel AG

(57) **Zusammenfassung**

Anschlussdose (1) für die faseroptische Verkabelung von faseroptischen Anschlüssen (8) in einem Gebäude umfassend ein Basiselement (11) zum Befestigen der Anschlussdose an einer Wand (5) und zur Aufnahme einer faseroptischen Installation sowie ein Schutzelement (41) zum Abdecken und Schützen der faseroptischen Installation, wobei die Anschlussdose ein Verriegelungselement (51) zum Verriegeln des Schutzelements (41) mit dem Basiselement (11) umfasst.

## Beschreibung

Die vorliegende Erfindung betrifft eine Anschlussdose für die faseroptische Verkabelung von faseroptischen Anschlüssen gemäss dem Oberbegriff von Anspruch 1. Derartige Anschlussdosen werden insbesondere für die Wandmontage von faseroptischen Anschlüssen in einem Gebäude verwendet.

Aus dem Stand der Technik sind unterschiedliche Anschlussdosen für die Wandinstallation von faseroptischen Anschlüssen, auch bekannt unter der Bezeichnung Optical Telecommunications Outlet (OTO), bekannt. Solche Anschlussdosen sind jedoch meist von bekannten elektrischen Wandanschlussdosen abgeleitet und für die Verwendung mit faseroptischen Installationen adaptiert. Dabei sind die Anforderungen an eine faseroptische Installation wesentlich komplexer als bei einer elektrischen Installation. Insbesondere für das Handling der empfindlichen Fasern sowie für das Einhalten von nicht zu unterschreitenden minimalen Biegeradien ist spezielle Aufmerksamkeit geboten.

Beispielsweise werden Anschlussdosen angeboten, welche flach an einer Wand montiert werden. Dabei weisen diese Dosen einseitig einen Bereich zum Fasermanagement auf und sind auf der anderen, der Montagewand zugeordneten Seite mit einem Raum zur Aufnahme einer Überlänge eines faseroptischen Kabels ausgestattet. Diese Anschlussdosen können in einer vorkonfektionierten Form faserseitig bereits mit Anschlussadapter und Pigtails ausgerüstet sein, oder als reine Dose ausgebildet sein. Ein Installateur muss in einer Wohn- oder Büroeinheit in einem ersten Schritt ein faseroptisches Kabel vom Verteilschrank oder Optical Distribution Frame (ODF) oder vom Building Entry Point (BEP) zum entsprechenden Auslass der Wohn- oder Büroeinheit einziehen. Üblicherweise werden für diesen Zwecke bereits bei der bauseitigen Bereitstellung des Gebäudes entsprechende Leerrohre vorgesehen. Als nächster Schritt ist das faseroptische Kabel an der Anschlussdose zu befestigen, wobei üblicherweise eine Überlänge vorgesehen wird. Diese Überlänge ist wandseitig in der Anschlussdose aufzunehmen. Das Kabel wird durch die Anschlussdose hindurchgeführt und die Anschlussdose an der Wand befestigt. Die einzelnen Fasern des Kabels werden nun mit den bereits vorhandenen oder separat gelieferten Pigtails mittels einer Spleissverbindung verbunden. Die Spleissstelle muss mit einem Spleissschutz versehen werden. Die Steckverbinder der Pigtails werden anschliessend in die Adapter der Anschlussdose eingesteckt. Spleissschutz und Faserüberlänge müssen nun in der Dose platziert und die Dose verschlossen werden.

Es hat sich gezeigt, dass die auf dem Markt erhältlichen Anschlussdosen nicht installationsfreundlich ausgestaltet sind und ein aufwendiges Handling benötigen. Ausserdem sind die bekannten Dosen relativ sperrig und stehen weit von der Wand ab. Der Deckel der Dose ist in vielen Fällen aufwändig zu entfernen und birgt die Gefahr, dass bei dessen Entfernung die gesamte Dose aus der Wand ausgerissen wird. Andere Dosen wiederum weisen einen Deckel auf, welche schon bei der leisesten Berührung ungewollt abspringt und die Installation freigibt.

Es ist daher eine Aufgabe der Erfindung, die Nachteile des Standes der Technik zu überwinden. Insbesondere soll eine einfach zu installierende Anschlussdose zur Verfügung gestellt werden, welche einfach zu konfektionieren und sicher zu verschliessen ist.

Diese Aufgabe wird durch die im unabhängigen Patentanspruch 1 definierte Vorrichtung gelöst. Weitere Ausführungsformen ergeben sich aus den abhängigen Patentansprüchen.

Eine erfindungsmässe Anschlussdose für die faseroptische Verkabelung von faseroptischen Anschlüssen in einem Gebäude umfasst ein Basiselement zum Befestigen der Anschlussdose an einer Wand und zur Aufnahme einer faseroptischen Installation. Die Anschlussdose umfasst weiter ein Schutzelement zum Abdecken und Schützen der faseroptischen Installation und ein Verriegelungselement zum Verriegeln des Schutzelements mit dem Basiselement. Dabei weist das Verriegelungselement optional ein Beschriftungsfeld zur Identifikation der Anschlussdose und/oder der darin aufgenommenen faseroptischen Anschlüsse auf.

Hier und im Folgenden wird unter einer Verriegelung ein mechanischer Verschluss verstanden, welcher definiert geöffnet werden kann, sich aber nicht unabsichtlich öffnen lässt. Konkret erfolgt die Verrieglung mit einem beweglichen Verriegelungselement, welches in eine entsprechende Verriegelungsöffnung eingreift. Unter einer Verriegelung wird nicht ein blosses Einschnappen oder Einrasten von Rastverbindungen verstanden.

Die Verwendung eines Verriegelungselementes bietet den Vorteil, dass die Ver- und Entriegelung von Basiselement und Schutzelement bewusst erfolgen muss. Ausserdem wird durch eine Verriegelung ein sicherer Verschluss gewährleistet. Ein unbeabsichtigtes Entriegeln wird ausgeschlossen.

Wenn das Verriegelungselement ein Beschriftungsfeld zur Identifikation der Anschlussdose und/oder der darin aufgenommenen faseroptischen Anschlüsse aufweist, können mit diesem Verriegelungselement mehrere Funktionen gleichzeitig erfüllt werden. Auf ein separates Beschriftungsfeld kann verzichtet werden.

Das Verriegelungselement kann linear verschiebbar oder drehbar am Basiselement gelagert sein. Durch eine lineare Verschiebung des Verriegelungselementes kann eine einfache Bewegung das Ver- und Entriegelung von Basiselement und Schutzelement bewirken. Bei einer drehbaren Ausgestaltung des Verriegelungselementes kann die Ver- und Entriegelung von Basiselement und Schutzelement durch eine Drehung des Verriegelungselementes erfolgen. Eine solche Ausgestaltung kann sehr platzsparend implementiert werden.

Das Verriegelungselement kann zwischen einer offenen Position, bei der das Schutzelement nicht verriegelt ist, und einer geschlossenen Position, bei der das Schutzelement verriegelt ist, bewegbar sein. Durch die Bewegung zwischen zwei definierte Positionen kann ein Anwender einfach sicherstellen, dass die gewünschte Position erreicht ist. Das Schutzelement ist sicher verriegelt oder kann sicher abgenommen werden. Die einzelnen Positionen können vorzugsweise durch Rastpositionen definiert sein, so dass auch bei Manipulationen an der Anschlussdose kein unbeabsichtigtes Verstellen des Verriegelungselementes erfolgen kann.

Das Beschriftungsfeld kann in der geschlossenen Position nicht sichtbar sein. Beispielweise kann das Verriegelungselement mit dem Beschriftungsfeld in der geschlossenen Position mehrheitlich in der Dose aufgenommen sein, so dass von aussen das Beschriftungsfeld nicht ersichtlich ist. Insbesondere in Wohnzimmern ist eine permanent sichtbare Beschriftung an einer Anschlussdose nicht wünschenswert. Eine Beschriftung ist jedoch nötig, um bei einer Installation die Anschlüsse korrekt zuordnen zu können.

Das Verriegelungselement kann eine dritte Position aufweisen, in der das Beschriftungsfeld sichtbar ist. Diese dritte Position ist vorzugsweise zwischen der offenen Position und der geschlossenen Position angeordnet. Entsprechend kann ein Installateur oder der Netzteilnehmer im Bedarfsfall das Verriegelungselement in diese dritte Position bringen, um die Beschriftung einsehen zu können. Wenn in dieser dritten Position das Schutzelement verriegelt ist, besteht beim Auslesen der Beschriftung keine Gefahr, dass das Schutzelement entfernt wird. Die faseroptische Installation ist weiterhin geschützt.

Das Verriegelungselement kann ein Griffteil aufweisen, welches bei verriegeltem Schutzelement aus der Anschlussdose herausragt. Die Manipulation des Verriegelungselementes erfolgt somit an einer vordefinierten Stelle, welche durch das Griffteil definiert ist. Alternativ kann das Verriegelungselement in der geschlossenen Position bündig mit dem Rand der Anschlussdose ausgerichtet sein. Vorzugsweise ist dann das Verriegelungselement durch ein Federelement vorgespannt und kann mittels eines Drucktasters wenigstens soweit ausgelöst werden, dass ein Installateur das Verriegelungselement erfassen kann.

Das Basiselement kann wenigstens eine Durchgangsöffnung zum Durchführen eines Kabels und einen Kabelaufnahmeraum zur Aufnahme einer Überlänge des Kabels aufweisen. Der Kabelaufnahmeraum ist dabei vorzugsweise auf der dem Schutzelement zugewandten Seite des Basiselementes angeordnet. Mit der Durchgangsöffnung wird gewährleistet, dass die Anschlussdose eine Wandöffnung, durch welche das Kabel in den Raum gelangt, abdecken kann. Mit der Anordnung des Kabelaufnahmeraumes auf der dem Schutzelement zugewandten Seite wird eine Installation vereinfacht. So kann zuerst das Basiselement an der Wand befestigt werden und anschliessend eine Überlänge des Kabels einfach aufgewickelt werden. Die Durchgangsöffnung weist beispielsweise eine lichte Öffnung auf, sodass ein Steckverbinder, insbesondere ein in einem Duplex-Adapter eingesteckter Steckverbinder der Norm IEC 61754-28 oder einer ähnlichen Bauform durch die Öffnung hindurchpasst. Die Öffnung weist vorzugsweise eine Breite von 28 mm und eine Höhe von 20 mm auf, kann aber auch grösser oder kleiner dimensioniert sein.

Der Kabelaufnahmeraum kann Kabelführungen aufweisen, welche das Einhalten minimaler Biegeradien gewährleisten. Ausserdem können Kabelaufnahmen vorgesehen sein, welche ein eingelegtes Kabel in der korrekten Position festhalten. Das Kabel kann durch zusätzliche Elemente gesichert werden.

Das Basiselement kann wenigstens einen Faseraufnahmeraum aufweisen, welcher zur Aufnahme einer Überlänge einer Faser dient. Üblicherweise wird das Kabel im Endbereich aufgetrennt und die einzelnen Fasern des Kabels werden für die weitere Verwendung freigelegt. Da zur Manipulation beim Anschliessen eines faseroptischen Steckverbinders eine bestimmte Faserüberlänge nötig ist, muss diese Überlänge definiert in der Anschlussdose abgelegt werden können. Der Faseraufnahmeraum ist vorzugsweise auf der dem Schutzelement zugewandten Seite des Basiselementes angeordnete. Eine Installation kann somit einfach an einem an einer Wand befestigten Basiselement erfolgen. Vorzugsweise sind zwei oder gar mehrere Faseraufnahmeräume vorgesehen, so dass nicht alle Fasern in demselben Faseraufnahmeraum versorgt werden müssen.

Der Faseraufnahmeraum kann Faserführungen aufweisen, welche das Einhalten minimaler Biegeradien der Fasern gewährleisten. Ausserdem können Faseraufnahmen zum Festhalten der Faser im Faseraufnahmeraum vorhanden sein. Insbesondere Glasfasern haben die Tendenz, sich zu strecken und aus dem Raum zur Aufnahme der Faser zu gleiten. Dies kann mit den Faseraufnahmen verhindert werden. Der Installateur muss somit keine zusätzlichen Elemente verwenden, um die Fasern gezielt im Faseraufnahmeraum positionieren zu können.

Das Basiselement kann eine Abdeckung zum Überdecken des Faseraufnahmeraumes aufweisen. Eine solche Abdeckung gewährleistet, dass selbst nach entfernen des Schutzelementes der Faseraufnahmeraum nicht frei zugänglich ist. Die Gefahr einer unbeabsichtigten Manipulation an der Faser kann verringert werden. Wenn die Abdeckung aus einem transparenten Material hergestellt ist, kann die darunterliegende faseroptische Installation geprüft werden.

Die Abdeckung kann mittels Befestigungsmitteln, welche im Bereich des Faseraufnahmeraumes angeordnet sind, am Basiselement befestigt sein. Ausserdem kann die Abdeckung mit einem Qualitätssiegels am Basiselement sicherbar und/oder gesichert sein. Hierzu kann beispielsweise eine Rastverbindung benutzt werden, welche nur mit einem speziellen Werkzeug gelöst werden kann. Alternativ kann aber auch ein Teil des Basiselementes durch eine Öffnung der Abdeckung greifen. An diesem Teil kann dann ein Siegel, eine Plombe, ein Kabelbinder oder ein ähnliches Element angebracht werden, welches das Öffnen oder Entfernen des Schutzelementes verhindert. Ebenso ist es denkbar, dass zwischen Basiselement und Abdeckung ein Siegellack aufgebracht wird, welcher beim Öffnen zwangläufig bricht. Ein Installateur kann somit sicherstellen, dass seine Installation nicht durch unbefugte Personen beschädigt wird.

Das Basiselement kann wenigstens eine Befestigungsöffnung zur Befestigung des Basiselementes an einer Wand aufweisen. Üblicherweise werden Anschlussdosen oder deren Basiselemente an einer Wand festgeschraubt. Hierzu werden entsprechende Schrauben durch die Befestigungsöffnungen in die Wand gedreht.

Wenn die Befestigungsöffnung als Langloch ausgestaltet ist, kann bei einer Befestigung des Basiselementes mittels Schrauben an einer Wand das Basiselement auch bei nicht präzis positionierten Schrauben nivelliert werden kann. Der Installateur kann somit die Anschlussdose nachträglich ausrichten. Entsprechend ist für das Setzen der für die Schrauben benötigten Löcher weniger Präzision gefordert.

Die Befestigungsöffnung kann ein Schlüssellochprofil aufweisen, so dass beispielsweise ein Schraubenkopf einer bereits in die Wand eingeschraubten Schraube aufgenommen werden kann. Dies ermöglicht eine Vormontage der Schrauben in der Wand, sodass das Basiselement ähnlich einem Bild eingehängt und nötigenfalls noch fixiert werden kann. Entsprechend wird die Befestigung an einer Wand nochmals vereinfacht. Vorzugsweise sind zwei sich gegenüberliegenden Befestigungsöffnungen schlüssellochförmig ausgebildet, während wenigstens zwei Befestigungsöffnungen als Langloch ausgeführt sind.

Das Basiselement kann am Rand Distanzhalter aufweisen, welche bei einer Anordnung mehrerer Basiselemente nebeneinander einen minimalen Abstand zwischen den Basiselementen sicherstellen. Ein Distanzhalter kann beispielsweise ein einfacher Vorsprung sein, welcher über den Rand des Basiselementes hinaussteht.

Diese Distanzhalter sind dabei so dimensioniert, dass eine Anschlussdose bündig in einer Ecke positioniert werden kann und/oder sich bei einer Anordnung von mehreren Anschlussdosen deren Schutzelemente berühren.

Zwischen der Wandseite und der dem Schutzelement zugewandten Seite des Basiselementes kann in einer durchgehenden Öffnung ein Befestigungsstift mit freiem Ende angeordnet sein. An einem solchen Befestigungsstift kann ein faseroptisches Kabel mit einem bereits um das Kabel geschlossenen Kabelbinder durch einfaches Aufstecken befestigt werden. Im Gegensatz hierzu kann bei einem in einer Öffnung durchgehenden Befestigungsstift der Kabelbinder erst beim Umschlingen des Befestigungsstiftes und des Kabels geschlossen werden. Das Durchschlaufen des Kabelbinders bedingt eine erhebliche Fingerfertigkeit.

Üblicherweise werden Anschlussdosen mit einem oder mehreren Adaptern für eine faseroptische Steckverbindung ausgerüstet. Meist handelt es sich dabei um sogenannte Duplex-Adapter, welche zwei nebeneinander liegende Steckverbindungen ermöglichen, beispielsweise für den getrennten Up- und Download. Der Adapter kann fest im Basiselement verbaut sein. Ebenso ist es denkbar, dass das Basiselement auf der dem Schutzelement zugewandten Seite wenigstens eine Adapteraufnahme aufweist. Diese Adapteraufnahme ist vorzugsweise so angeordnet, dass eine Seite eines eingesetzten Adapters aus der Dose ragt oder mit dem Schutzelement bündig ist. Entsprechend kann ein in der Anschlussdose aufgenommenes Kabel mit einem faseroptischen Steckverbinder versehen werden, welcher dann dosenseitig in den Adapter eingesteckt werden kann. Ein Anschluss an die Anschlussdose von aussen erfolgt in herkömmlicher Weise ebenfalls mit einem faseroptischen Steckverbinder. Die Adapteraufnahme kann Einrastkonturen aufweisen, so dass ein Adapter einfach im Basiselement eingesetzt werden kann und darin nach dem Einrasten festsitzt. Zwischen den Aufnahmen für die einzelnen Adapter kann eine Trennwand vorgesehen sein, so dass die eingesetzten Adapter sich zumindest an drei Seiten im Basiselement abstützen.

Die Anschlussdose kann auf der dem Schutzelement zugewandten Seite wenigstens einen elastischen Spleisshalter zur Aufnahme unterschiedlich dimensionierter Spleissschütze aufweisen. Die Installation der Anschlussdose und das Anschliessen eines faseroptischen Kabels können dann durch Spleissen eines vorkonfektionierten Steckverbinders erfolgen. Dabei wird die Spleissverbindung in herkömmlicherweise in einen Spleisschutz eingelegt, welcher wiederum in der Anschlussdose aufgenommen wird. Bei elastischer Ausgestaltung des Spleisshalters können unterschiedlich dimensionierte Spleissschütze aufgenommen werden. Der Installateur kann somit seine bevorzugten Spleissschütze verwenden und ist nicht an ein spezielles Modell gebunden. Die Spleisshalter können als bogenförmiges Federelement ausgestaltet sein, welches einen Spleisshalter an einen Wandbereich des Basiselementes drückt. Dabei kann eine Kontaktfläche des Spleisshalters eine spezifische Kontur aufweisen, um den Spleissschutz besser aufnehmen zu können.

Das Schutzelement kann zusätzlich zur Verriegelung durch das Verriegelungselement über eine Scharnierverbindung und/oder eine Rastverbindung mit dem Basiselement verbindbar und/oder verbunden sein. Die Verbindung als Scharnier hat den Vorteil, dass das Schutzelement nicht-verlierbar am Basiselement befestigt ist. Das Scharnier kann beispielsweise als Filmscharnier ausgestaltet sein. Eine Verbindung mittels Rastverbindung erlaubt ein komplettes Abtrennen des Schutzelementes, wobei die Rastverbindung beispielsweise auf der dem Verriegelungselement gegenüberliegenden Seite eine feste Verbindung gewährleistet.

Das Verriegelungselement kann mittels eines Qualitätssiegels am Basiselement sicherbar und/oder gesichert sein. Somit kann ein unbefugtes Öffnen der Anschlussdose vermieden oder zumindest erkannt werden. Dabei kann jegliche Bewegung des Verriegelungselementes gesichert werden oder lediglich eine Verschiebung in die offene Position.

Die Anschlussdose kann zusätzlich ein Distanzelement aufweisen, welches wandseitig am Basiselement angeordnet ist. Ein solches Distanzelement ist vorzugsweise mittels einer Schnappverbindung am Basiselement befestigt. Das Distanzelement kann dann zum Einsatz kommen, wenn die Anschlussdose ein bestimmtes Mass von der Wand abstehen muss oder wenn zwischen Basiselement und Wand ein Abstand eingehalten werden muss. Dies ist beispielsweise dann der Fall, wenn das Kabel für die faseroptische Installation nicht durch eine Öffnung in Wand geführt wird, sondern das Kabel auf der Wand geführt wird.

Das Distanzelement kann wenigstens eine seitliche Eingangsöffnung aufweisen, welche den Zugang unter das Basiselement erlaubt. Ein solcher Zugang ist vorzugsweise durch ein ausbrechbares Element verschlossen. Vorzugsweise weist das Distanzelement auf mehreren Seiten mehrere Zugänge auf. Dem Installateur wird somit eine möglichst grosse Flexibilität in der Installation ermöglicht.

Anhand von Figuren, welche lediglich Ausführungsbeispiele darstellen, wird die Erfindung im Folgenden näher erläutert. Es zeigen:
- Figur 1:: eine perspektivische Ansicht auf eine erfindungsgemässe Anschlussdose mit ausgefahrenem Verriegelungselement,
- Figur 2:: eine perspektivische Ansicht auf die Anschlussdose aus Figur 1, wobei das Verriegelungselement eingefahren ist,
- Figur 3:: eine perspektivische Ansicht auf die Anschlussdose aus Figur 1, ohne Schutzelement,
- Figur 4:: eine perspektivische Ansicht auf das Schutzelement der Anschlussdose gemäss Figur 1 von der Rückseite,
- Figur 5:: eine perspektivische Ansicht auf die Anschlussdose ohne Schutzelement gemäss Figur 3 von der Rückseite,
- Figur 6:: eine perspektivische Ansicht auf ein Distanzelement für die Anschlussdose gemäss Figur 1,
- Figur 7:: eine perspektivische Ansicht auf das Distanzelement gemäss Figur 6 von der Rückseite,
- Figur 8:: eine perspektivische Ansicht auf eine Abdeckung für die Anschlussdose gemäss Figur 1,
- Figur 9:: eine perspektivische Ansicht auf die Anschlussdose gemäss Figur 3 mit Abdeckung gemäss Figur 8.

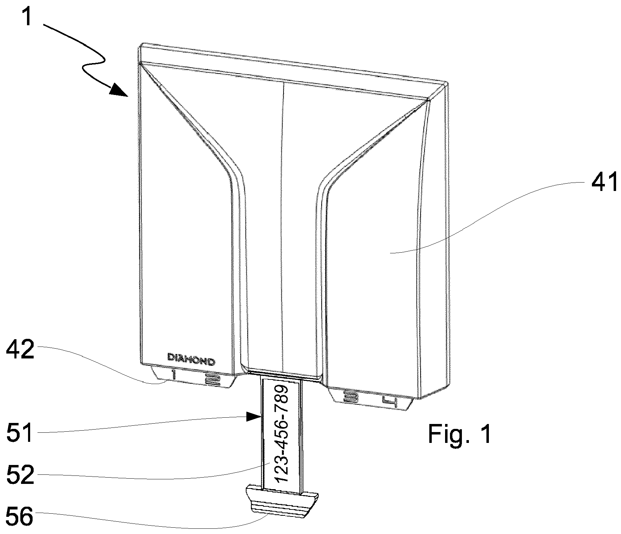

Die Figur 1 zeigt eine perspektivische Ansicht auf eine erfindungsgemässe Anschlussdose 1 für eine faseroptische Installation, wobei im Wesentlichen ein Schutzelement 41 sichtbar ist, welches die faseroptische Installation abdeckt und die Anschlussdose 1 verschliesst.

Darstellungsgemäss auf der unteren Seite der Anschlussdose 1 ragt ein Verriegelungselement 51 aus der Anschlussdose 1 hervor. Das Verriegelungselement 51 weist ein Beschriftungsfeld 52 auf, auf dem von einem Installateur eine beliebige Bezeichnung angebracht werden kann. Beispielsweise wird dort eine Identifikationsnummer aufgebracht, welche eine Zuordnung der Anschlussdose 1 bzw. deren faseroptische Installation zur entsprechenden Installation in einem Verteilkasten vereinfacht. Das Verriegelungselement 51 weist an seinem vorstehenden Ende ein Griffteil 56 auf, an dem der Installateur das Verriegelungselement 51 betätigen kann.

Ebenfalls auf der darstellungsgemässen unteren Seite der Anschlussdose 1 ist auf dem Schutzelement 41 eine Nummerierung erkennbar, welche einer Anschlussbezeichnung 42 entspricht. Unter dieser Anschlussbezeichnung 42 können entsprechende Adapter angeordnet werden, welche ein Anschliessen eines faseroptischen Steckverbinders an die Anschlussdose 1 ermöglichen.

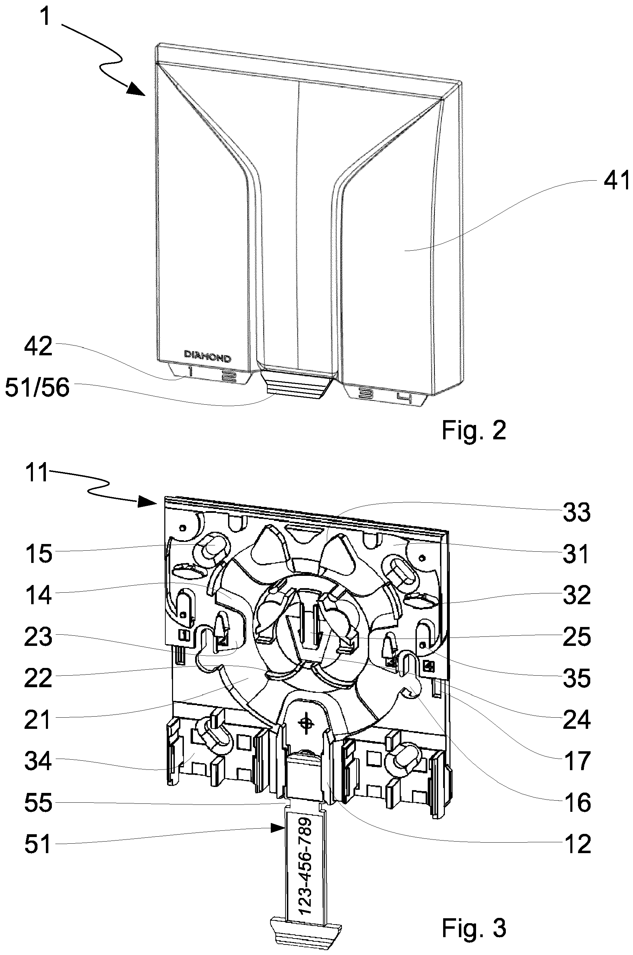

Die Figur 2 zeigt in einer perspektivischen Ansicht die Anschlussdose 1 aus Figur 1, wobei das Verriegelungselement 51 eingefahren ist. Entsprechend ist lediglich noch dessen Griffteilt 56 sichtbar. Wiederum ist auf dem Schutzelement 41 die Anschlussbezeichnung 42 erkennbar, welche auf dem Schutzelement 41 die einzelnen Anschlüsse kennzeichnet.

In Figur 3 ist in einer perspektivischen Ansicht die Anschlussdose 1 aus Figur 1 dargestellt, allerdings ohne Schutzelement 41 (siehe Figur 1). Es wird die Ansicht auf ein Basiselement 11 frei, welches die gesamte faseroptische Installation aufnimmt. Dieses Basiselement 11 wird mittels Befestigungsöffnungen 15 beispielsweise an eine Wand eines Gebäuderaumes festgeschraubt. Insgesamt sind vier Befestigungsöffnungen 15 dargestellt, welche allesamt als Langloch ausgebildet sind. Entsprechend kann auch bei nicht präzise ausgeführten Bohrungen das Basiselement 11 und somit auch die gesamte Anschlussdose nivelliert werden. Neben den vier Befestigungsöffnungen 15 sind auch noch Öffnungen mit einem Schlüssellochprofil 16 ausgebildet. Diese dienen der einfachen Befestigung an Schrauben, welche bereits in der Wand vorhanden sind.

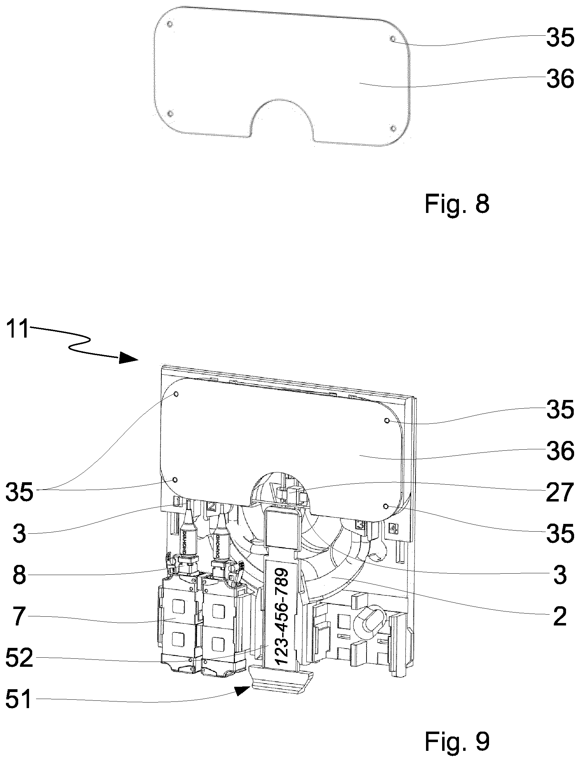

Im zentralen Bereich des Basiselementes 11 sind mehrere Durchgangsöffnungen 14 vorhanden, welche ein Hindurchführen eines Kabels von der einen Seite des Basiselementes, also von einer Wand, zur anderen Seite ermöglichen. Ein solches Kabel wird nach dem Durchführen durch die Durchgangsöffnung 14 in einem Kabelaufnahmeraum 21 abgelegt. Um einen minimalen Biegeradius des Kabels nicht zu unterschreiten, weist dieser Kabelaufnahmeraum 21 Kabelführungen 22 auf. Damit das Kabel im Kabelaufnahmeraum 21 festgehalten wird, sind flügelartige Kabelaufnahmen 23 ausgebildet, welche das Kabel in Position halten. Zum Fixieren des Kabels am Basiselement 11 ist im Zentrum des Basiselementes 11 eine weitere Öffnung 24 und darin ein Stift 25 mit freiem Ende angeordnet. An diesem Stift kann das Kabel beispielsweise mit einem Kabelbinder 27 (siehe Figur 9) festgezurrt werden. Dieses Festzurren verhindert, dass die faseroptische Installation, welche aus den einzelnen Lichtwellenleitern des Kabels gebildet wird, sich nicht übermässig bewegt und somit belastet werden kann.

Das gezeigte Basiselement 11 weist zwei Faseraufnahmeräume 31 auf, in welchen die einzelnen Lichtwellenleiter aufnehmen. Faserführungen 33 gewährleisten, dass ein minimaler Beigeradius der einzelnen Fasern nicht unterschritten werden kann, während flügelartige Faseraufnahmen 32 die Fasern im Faseraufnahmeraum 31 festhalten. Der Bereich der Faseraufnahmeräume 31 kann nach erfolgter Installation durch eine Abdeckung 36 (siehe Figuren 8 und 9) überdeckt werden, so dass die faseroptische Installation geschützt ist. Zum Befestigen der Abdeckung sind im Bereich der Faseraufnahmeräume 31 Befestigungsmittel 35 ausgebildet, welche mit Befestigungsmitteln der Abdeckung korrespondieren. Im dargestellten Fall handelt es sich um einfache Nocken, welch ein korrespondierende Aussparungen der Abdeckung eingreifen.

In einem darstellungsgemäss unteren Teil des Basiselementes 11 sind vier Adapteraufnahmen 34 erkennbar. In diese Adapteraufnahmen 34 können faseroptisch Steckadapter eingesetzt werden, an welche von ausserhalb der Anschlussdose korrespondierende faseroptische Steckverbinder eingesteckt werden können. Auf der dem Innern der Anschlussdose zugewandten Seite kann die faseroptische Installation ebenfalls mittels entsprechender Steckverbinder angeschlossen werden.

In der Darstellung ebenfalls im unteren Bereich zwischen den Adapteraufnahmen 34 ist eine Verriegelungsführung 12 vorhanden, welche das Verriegelungselement 51 linear verschiebbar lagert. Das Verriegelungselement 51 befindet sich in der Darstellung in einer offenen Position 55. Entsprechend konnte das Schutzelement 41 (siehe Figur 1) abgenommen werden. Zur Definition der offenen Position 55 dienen Ausschnitte am Verriegelungselement 51, welche das Entfernen des Schutzelementes erlauben.

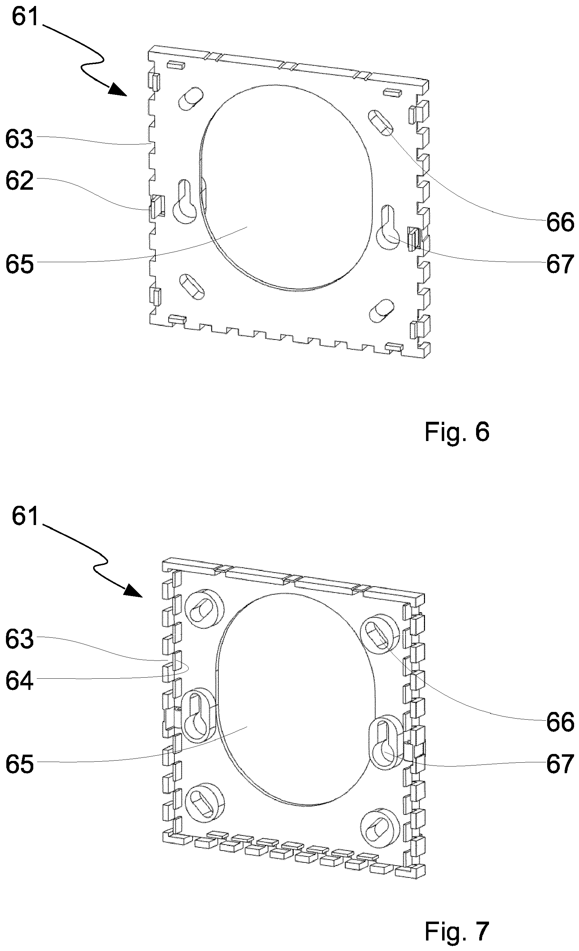

Das Basiselement 11 weist im Randbereich links und rechts auf mittlerer Höhe angeordnete Rastöffnungen 17 auf, welche zum einrastenden Befestigen eines Distanzelementes 61 (siehe Figuren 6 und 7) dienen.

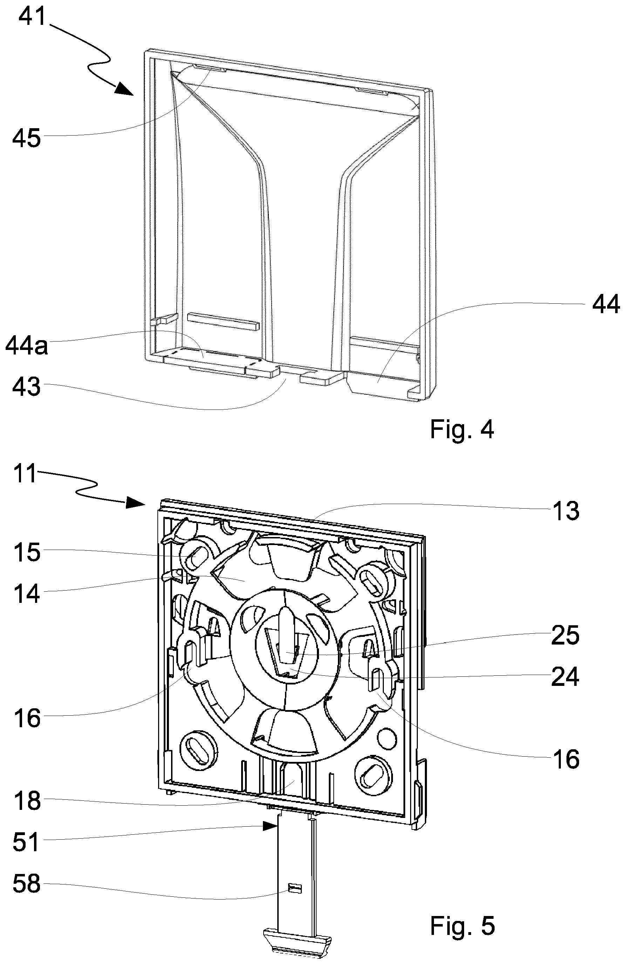

Die Figuren 4 und 5 zeigen je in einer perspektivischen Rückansicht das Schutzelement 41 bzw. das Basiselement 11 gemäss den Figuren 1 und 3.

Das Schutzelement 11 weist auf seiner Rückseite darstellungsgemäss im oberen Bereich zwei Rastnasen 45 auf. Diese Rastnasen 45 greifen beim Anbringen des Schutzelementes 41 auf dem Basiselement 11 hinter eine Rastkante 13, so dass das Schutzelement 11 im seinem darstellungsgemässen oberen Bereich fest mit dem Basiselement verbunden ist. Zur Verriegelung des Schutzelementes 41 am Basiselement 11 wird nun eine Verriegelungsöffnung 43 im unteren Bereich der Darstellung mit seiner Verengung über die Ausschnitte zur Definition der offenen Position 55 (siehe Figur 3) des Verriegelungselements 51 geführt. Sobald das Verriegelungselement 51 jetzt in Richtung der Innenseite der Anschlussdose (in der Darstellung nach oben) bewegt wird, ist das Schutzelement 41 am Basiselement 11 fest verriegelt.

Ebenfalls im dargestellten unteren Bereich des Schutzelementes 41 weist dieses Adapteröffnungen 44 auf, welche bereits ausgebildet sein können oder mittels Sollbruchstellen als Ausbruchöffnung 44a definiert sind. Sowohl die Adapteröffnungen 44 als auch die Ausbruchöffnung 44a sind dabei im Bereich angeordnet, welcher mit den Adapteraufnahmen 34 (siehe Figur 3) korrespondiert.

Am Basiselement 11 sind die Befestigungsöffnungen 15 als Langloch erkennbar. Ebenso sind die beiden Öffnungen mit Schlüssellochprofil 16 sichtbar, welche eine Befestigung an einer bestehenden Schraube einer Wand vereinfachen. Die Durchgangsöffnungen 14 zum Durchführen eines Kabels sowie im Zentrum die Öffnung 24 und der Stift 25 zur Kabelfixierung sind ebenfalls ersichtlich.

Das Verriegelungselement 51 weist auf seiner Rückseite eine Rastöffnung 58 auf, welche zusammen mit einem am Basiselement 11 als Rastzunge ausgebildeten Rastelement 18 die geschlossene Position des Verriegelungselementes 51 definieren.

In den Figuren 6 und 7 ist je in einer perspektivischen Ansicht ein Distanzelement 61 abgebildet, welches fall nötig zwischen dem Basiselement 11 (siehe Figuren 3 und 5) und einer Wand angeordnet werden kann. Dabei zeigt die Figur 6 die Ansicht auf die einem Basiselement zugewandten Seite, während die Figur 7 die einer Wand zugewandten Rückseite zeigt. Das Distanzelement 61 weist im zentralen Bereich eine grosse Durchgangsöffnung 65 auf, durch welche ein Kabel hindurchgeführt werden kann. Diese Durchgangsöffnung 65 ist bewusst grösser ausgestaltet, als die Summe der Durchgangsöffnungen 14 des Basiselementes (siehe Figuren 3 und 5). Auf der dem Basiselement zugewandten Seite sind beidseits am Rand Rastzungen 62 ausgebildet, welche mit den Rastöffnungen 17 des Basiselements 11 (siehe Figur 3) korrespondieren und eine Befestigung und Ausrichtung zwischen Rastelement und Distanzelement 61 ermöglichen. Umlaufend sind am Rand mehrerer Eingangsöffnungen 63 ausgebildet, welche von einem ausbrechbaren Element 64 verschlossen sind. Nötigenfalls können diese ausbrechbaren Element 64 einfach entfernt werden, so dass ein seitlicher Zugang zum Distanzelement 61 und somit zur Anschlussdose hergestellt werden kann. Zur Befestigung des Distanzelementes 61, zusammen mit dem Basiselement sind Befestigungsöffnungen 66 ausgebildet. Für eine Montage an bereits vorhandenen Schrauben einer Wand sind zusätzlich Öffnungen mit einem Schlüssellochprofil 67 ausgebildet. Die Befestigungsöffnungen 66 und die Öffnungen mit Schlüssellochprofil 67 korrespondieren mit den entsprechenden Öffnungen (15, 16) des Basiselementes 11 (siehe Figuren 3 und 5).

Die Figur 8 zeigt eine perspektivische Ansicht auf eine Abdeckung 36 für die Anschlussdose gemäss Figur 1. Dabei weist das Abdeckelement 36 Befestigungsmittel 35 auf, welche mit den Befestigungsmitteln 35 des Basiselementes 11 (siehe Figur 3) korrespondieren. Im dargestellten Ausführungsbeispiel handelt es sich um einfache Löcher, welche das Befestigungsmittel des Basiselementes aufnehmen.

In Figur 9 ist eine Anschlussdose ohne Schutzelement in einer perspektivischen Ansicht dargestellt. Dabei ist auf dem Basiselement 11 im Bereich des Faseraufnahmeraumes 31 (siehe Figur 3) die Abdeckung 36 angebracht, so dass der Faseraufnahmeraum abgedeckt ist. Die Abdeckung 36 wird mit den Befestigungsmitteln 35 am Basiselement 11 befestigt. In der dargestellten Ausführungsform ist das Verriegelungselement 51 in der geschlossenen Position gezeigt, d.h. das Beschriftungsfeld 52 wäre bei aufgesetztem Schutzelement nicht sichtbar und das Schutzelement wäre verriegelt. Das dargestellte Basiselement 11 ist bereits mit einem Kabel 2 bestückt, welches im Kabelaufnahmeraum abgelegt ist. Das Kabel 2 wird mittels eines Kabelbinder 27 am Stift 25 (siehe Figur 3) fixiert, so dass die faseroptische Installation keine unnötigen Bewegungen ausgesetzt ist. Das Kabel 2 weist zwei Fasern 3 auf, welche je mit einem Steckverbinder 8 konfektioniert sind. Die Fasern 3 sind dabei im Faseraufnahmeraum abgelegt. Der Faseraufnahmeraum wird im Wesentlichen von der Abdeckung 36 überdeckt, so dass die Fasern 3 nur an wenigen Stellen in der Figur 9 sichtbar sind. Die beiden Steckverbinder 8 sind je in einem Adapter 7 eingesteckt, welche im in entsprechenden Adapteraufnahmen aufgenommen sind.

## Patentansprüche

1. Anschlussdose (1) für die faseroptische Verkabelung von faseroptischen Anschlüssen (8) in einem Gebäude umfassend ein Basiselement (11) zum Befestigen der Anschlussdose an einer Wand und zur Aufnahme einer faseroptischen Installation sowie ein Schutzelement (41) zum Abdecken und Schützen der faseroptischen Installation, wobei die Anschlussdose ein Verriegelungselement (51) zum Verriegeln des Schutzelements (41) mit dem Basiselement (11) umfasst, wobei das Verriegelungselement optional ein Beschriftungsfeld (52) zur Identifikation der Anschlussdose (1) und/oder der faseroptischen Anschlüsse (8) aufweist.

2. Anschlussdose (1) gemäss Anspruch 1, wobei das Verriegelungselement (51) linear verschiebbar oder drehbar am Basiselement (11) gelagert ist.

3. Anschlussdose (1) gemäss Anspruch 1 oder 2, wobei das Verriegelungselement (51) zwischen einer offenen Position (55), bei der das Schutzelement (41) nicht verriegelt ist, und einer geschlossenen Position, bei der das Schutzelement (41) verriegelt ist, bewegbar ist.

4. Anschlussdose (1) gemäss einem der vorhergehenden Ansprüche, wobei das Verriegelungselement (51) eine dritte Position aufweist, vorzugsweise zwischen der offenen Position (55) und der geschlossenen Position, in der das Beschriftungsfeld (52) sichtbar ist.

5. Anschlussdose (1) gemäss Anspruch 4, wobei in der dritten Position das Schutzelement (41) verriegelt ist.

6. Anschlussdose (1) gemäss einem der vorhergehenden Ansprüche, wobei das Basiselement (11) wenigstens eine Durchgangsöffnung (14) zum Durchführen eines Kabels (2) und einen Kabelaufnahmeraum (21) zur Aufnahme einer Überlänge eines Kabels (2) aufweist, wobei der Kabelaufnahmeraum (21) auf der dem Schutzelement (41) zugewandten Seite angeordnete ist.

7. Anschlussdose (1) gemäss Anspruch 6, wobei der Kabelaufnahmeraum (21) Kabelführungen (22) zum Einhalten minimaler Biegeradien und Kabelaufnahmen (23) zum Festhalten des Kabels (2) aufweist.

8. Anschlussdose (1) gemäss einem der vorhergehenden Ansprüche, wobei das Basiselement (11) wenigstens einen Faseraufnahmeraum (31) zur Aufnahme einer Überlänge einer Faser (3) aufweist, wobei der Faseraufnahmeraum (31) auf der dem Schutzelement (41) zugewandten Seite angeordnete ist.

9. Anschlussdose (1) gemäss Anspruch 8, wobei der Faseraufnahmeraum (31) Faserführungen (33) zum Einhalten minimaler Biegeradien und Faseraufnahmen (32) zum Festhalten der Faser (3) aufweist.

10. Anschlussdose (1) gemäss Anspruch 8 oder 9, wobei das Basiselement (11) eine Abdeckung (36) zum Überdecken des Faseraufnahmeraumes (31) aufweist.

11. Anschlussdose (1) gemäss Anspruch 10, wobei die Abdeckung (36) mittels im Bereich des Faseraufnahmeraumes (31) angeordneten Befestigungsmitteln (35) am Basiselement (11) befestigt ist und vorzugsweise mittels eines Qualitätssiegels (37) am Basiselement (11) sicherbar und/oder gesichert ist.

12. Anschlussdose (1) gemäss einem der vorhergehenden Ansprüche, wobei das Basiselement (11) wenigstens eine Befestigungsöffnung (15) zur Befestigung des Basiselementes (11) an einer Wand (5) aufweist.

13. Anschlussdose (1) nach einem der vorhergehenden Ansprüche, wobei auf der dem Schutzelement (41) zugewandten Seite wenigstens eine Adapteraufnahme (37) zur Aufnahme wenigstens eines faseroptischen Adapters (7) angeordnet ist.

14. Anschlussdose (1) gemäss einem der vorhergehenden Ansprüche, wobei die Anschlussdose (1) zusätzlich ein Distanzelement (61) aufweist, welches wandseitig am Basiselement (11) angeordnet, vorzugsweise mittels einer Schnappverbindung am Basiselement (11) befestigt, ist.

15. Anschlussdose (1) gemäss einem der vorhergehenden Ansprüche, wobei das Distanzelement (61) wenigstens eine seitliche Eingangsöffnung (63) aufweist, welche vorzugsweise durch ein ausbrechbares Element (64) verschlossen ist.
